# EUROPEAN PATENT SPECIFICATION

(11) **EP 2 010 371 B1**
(45) Date of publication and mention of the grant of the patent: **11.07.2012**
(21) Application number: 07776219.3
(22) Date of filing: 24.04.2007
(51) Int. Cl.: B29C 70/64

(54) **NOVEL SURFACE AESTHETICS EMPLOYING MAGNETIC PARTICLES**
NEUE OBERFLÄCHENÄSTHETIK UNTER VERWENDUNG MAGNETISCHER PARTIKEL
NOUVELLE ESTHÉTIQUE DE SURFACE UTILISANT DES PARTICULES MAGNÉTIQUES

(30) Priority: 26.04.2006 US 412178
(43) Date of publication of application: 07.01.2009
(73) Proprietor: E.I. DU PONT DE NEMOURS AND COMPANY, Wilmington, DE 19898 (US)
(72) Inventor: OLSON, Barry, D., Williamsville, New York 14221-8516 (US)
(74) Representative: Morf, Jan Stefan
(86) International application number: PCT/US2007/010079
(87) International publication number: WO 2007/127275

(56) References cited:
- WO-A-2005/011953
- DE-A1- 10 013 617
- JP-A- 1 259 916
- JP-A- 5 192 964

## Description

### BACKGROUND OF THE INVENTION

### Field of Invention

This invention relates to a process for producing a decorative surfacing material by selective orientation of decorative fillers by magnetic means.

### Description of the Related Art

The preferred use for the process of this invention is the production of a decorative solid surface material. As employed herein, a solid surface material is understood in its normal meaning and represents a uniform, non-gel coated, non-porous, three dimensional solid material containing polymer resin and particulate filler, such material being particularly useful in the building trades for kitchen countertops, sinks, wall coverings, and furniture surfacing wherein both functionality and an attractive appearance are necessary. A well-known example of a solid surface material is Corian® produced by E. I. DuPont de Nemours and Company. A number of design aesthetics are heretofore known in solid surface materials, such as granite and marble, but they have a mostly two-dimensional appearance.

Most solid surface materials are manufactured by thermoset processes, such as sheet casting, cell casting, injection molding, or bulk molding. The decorative qualities of such products are greatly enhanced by incorporating pigments and colored particles such that the composite resembles natural stone. The range of patterns commercially available are constrained by the intermediates and processes currently used in the manufacturing of such materials.

Solid surface materials in their various applications serve both functional and decorative purposes. The incorporation of various attractive and/or unique decorative patterns into solid surface materials enhances its utility. Such patterns constitute intrinsically useful properties, which differentiate one product from another. The same principle applies to naturally occurring materials such as wood, marble, and granite whose utility, for example in furniture construction, is enhanced by certain naturally occurring patterns, e.g., grain, color variations, veins, strata, inclusions, and others. Commercially manufactured solid surface materials often incorporate decorative patterns intended to imitate or resemble naturally occurring patterns in granite or marble. However, due to limitations of feasibility and/or practicality, certain decorative patterns and/or categories of decorative patterns have not previously been incorporated in solid surface materials.

Decorative patterns that have been previously achieved in traditional solid surface manufacturing typically employ one of three methods:
(i) Monochromatic or polychromatic pieces of a pre-existing solid surface product are mechanically ground to produce irregularly shaped macroscopic particles, which are then combined with other ingredients in an uncured solid surface casting composition. Commonly employed macroscopic decorative particles known to the industry as "crunchies" are various filled and unfilled, pigmented or dyed, insoluble or crosslinked chips of polymers. Curing the casting composition during casting or molding produces a solid surface material in which colored inclusions of irregular shapes and sizes are surrounded by, and embedded in a continuous matrix of different color.
(ii) Casting a first and second curable compositions wherein the second composition is of a different color than the first composition, and is added in such a way that the two only intermix to a limited degree. In the resulting solid surface material, the different colored domains have smooth shapes and are separated by regions with continuous color variation.
(iii) Fabricating different colored solid surface products by cutting or machining into various shapes, which are then joined by means of adhesive to create multi-colored inlayed patterns or designs.

Using these traditional methods, it is required to mix materials of different colors or appearances to form decorative patterns. They do not produce certain categories of decorative patterns not dependent on combinations of different colors.

A new class of aesthetic for solid surface materials is disclosed in United States Patent 6,702,967 to Overholt et al which discloses a process for making a decorative surfacing material having a pattern by preparing a curable composition with orientable anisotropic particles, forming numerous fragments of the composition, and reforming the fragments into a cohesive mass with at least some of the fragments having the oriented particles in different orientations.

DE-A-10013617 discloses the extrusion variant of claim 1 but without using calender rolls and the aspect ratio of the particles not being mentioned.

### SUMMARY OF THE INVENTION

The invention is a process for forming a decorative pattern in a surface of a solid surface material as defined in claim 1

### DRAWINGS

These and other features, aspects, and advantages of the present invention will become better understood with reference to the following description, append claims, and accompanying drawings where
FIG. 1 is cross-section of a sheet of material with oriented anisotropic particulate filler.
FIG. 2 is a cross-section of a sheet of material with regions of reoriented anisotropic particulate filler.
FIG. 3 is an illustration of the pattern created when traversing a composition containing anisotropic particulate filler that is magnetic in character with a magnetic field.

### DETAILED DESCRIPTION OF THE PREFERRED EMBODIMENTS

The present invention is a process for forming a decorative pattern in solid surface materials with magnetic anisotropic particles by orienting the anisotropic particulate filler. The magnetic anisotropic particulate filler with an aspect ratio of at least 20 in an uncured solid surface composition may be oriented by various means wherein at least some of the orientable particles are in a common orientation and subsequently reorienting, by various means, at least some of the oriented magnetic anisotropic particles (i.e., flakes) in specific regions to form a decorative pattern in solid surface materials. The pattern is created by differences in anisotropic particle orientation between adjacent regions within the solid surface material. The process will create an aesthetic three-dimensional appearance in the solid surface material by the way ambient light differentially interacts with the adjacent regions due to particle orientation.

Solid surface compositions useful in the present invention are not specifically limited as long as they are flowable under process conditions and can be formed into a solid surface material. The polymerizable composition may be a casting sirup as disclosed in United States Patent 3,474,081 to Bosworth, and cast on a moving belt as disclosed in United States Patent 3,528,131 to Duggins. In another embodiment of the invention, the polymerizable compositions may be made by a process in which compression molding thermosettable formulations are made and processed as described in Weberg et al, in United States Patent 6,203,911 and the compression molding compound is put through an extrusion process step. Solid surface formulations could also include various thermoplastic resins capable of compression molding. In a further embodiment of the invention, the polymerizable composition may be made and extruded according to the disclosure of Beauchemin et al in United States Patent 6,476,111. In all embodiments, orientable magnetic anisotropic aesthetic-enhancement particles are included in the polymerizable compositions, as described hereinafter. Anisotropic pigments, reflective particles, fibers, films, and finely divided solids (or dyes) may be used as the aesthetic-enhancement particles to highlight orientation effects. By controlling the amount of enhancement particles, and the shape and size of the reoriented regions, the translucency of the resulting solid surface material can be manipulated to give a desired aesthetic. Different colors, reflectivity, and translucency can be achieved by combining different amounts of enhancement particles, fillers, and colorants, and the degree to which the anisotropic filler particles are reoriented.

Magnetic anisotropic particulate fillers useful in the present invention are not specifically limited as long as they are magnetic in character, and have an aspect ratio of at least 20 to promote particle orientation during material processing and have an appearance that changes relative to the orientation to the material and the observer. Preferred magnetic anisotropic particulate fillers include materials that have an aspect ratio of at least 20 to promote particle orientation during material processing and have an appearance that changes relative to the orientation to the material and the observer. The aspect ratios of suitable enhancement particles cover a broad range, e.g. metallic flakes (20-100), mica, metallized glass fiber, metallized aramid fiber (100-500). These visual effects may be due to angle dependent reflectivity, angle dependent color absorption/reflection, or visible shape. These magnetic particles may be plate-like, fibers, or ribbons. The aspect ratio is the ratio of the greatest length of a particle to its thickness. The aspect ratio will be at least 20. Plate-like materials have two dimensions significantly larger than the third dimension. Examples of plate-like materials include, but are not limited to: mica, synthetic mica, metal flakes, alumina, synthetic materials such as ultra-thin, multi-layer interference flakes (e.g., Chromaflair^{®} from Flex Products). In many cases, the surfaces of the plate-like substrate are coated with various metal oxides or pigments to control color and light interference effects, and add magnetic properties. Some materials appear to be different colors at different angles. Metal flakes with magnetic properties are found to be especially useful. Exemplary metal flakes for magnetic reorientation include steel, stainless steel, nickel, and combinations thereof.

Metal-coated fibers have one dimension that is significantly larger than the other two dimensions. Examples of fibers include, metal, polymer, carbon, glass, and ceramic. Ribbons have one dimension that is significantly larger than the other two, but the second dimension is noticeably larger than the third. Examples of ribbons would include metals and polymer films.

Optionally, the polymeric compositions may include particulate or fibrous fillers that are not isotropic, nor magnetic, nor aesthetic. In general, fillers increase the hardness, stiffness, or strength of the final article relative to the pure polymer or combination of pure polymers. It will be understood, that in addition, the filler can provide other attributes to the final article. For example, it can provide other functional properties, such as flame retardation, or it may serve a decorative purpose and modify the aesthetic. Some representative fillers include alumina, alumina trihydrate (ATH), alumina monohydrate, aluminum hydroxide, aluminum oxide, aluminum sulfate, aluminum phosphate, aluminum silicate, Bayer hydrate, borosilicates, calcium sulfate, calcium silicate, calcium phosphate, calcium carbonate, calcium hydroxide, calcium oxide, apatite, glass bubbles, glass microspheres, glass fibers, glass beads, glass flakes, glass powder, glass spheres, barium carbonate, barium hydroxide, barium oxide, barium sulfate, barium phosphate, barium silicate, magnesium sulfate, magnesium silicate, magnesium phosphate, magnesium hydroxide, magnesium oxide, kaolin, montmorillonite, bentonite, pyrophyllite, mica, gypsum, silica (including sand), ceramic microspheres, ceramic particles, ceramic whiskers, powder talc, titanium dioxide, diatomaceous earth, wood flour, borax, or combinations thereof. Furthermore, the fillers can be optionally coated with sizing agents, for example, silane (meth)acrylate which is commercially available from OSI Specialties (Friendly, WV) as Silane 8 Methacrylate A-174. The filler is present in the form of small particles, with an average particle size in the range of from about 5-500 microns, and can be present in amounts of up to 65% by weight of the polymerizable composition.

The nature of the filler particles, in particular, the refractive index, has a pronounced effect on the aesthetics of the final article. When the refractive index of the filler is closely matched to that of the polymerizable component, the resulting final article has a translucent appearance. As the refractive index deviates from that of the polymerizable component, the resulting appearance is more opaque. ATH is often a preferred filler for poly(methylmethacrylate) (PMMA) systems because the index of refraction of ATH is close to that of PMMA. Of particular interest are fillers with particle size between 10 microns and 100 microns. Alumina (Al₂O₃) improves resistance to marring. Fibers (e.g., glass, nylon, aramid, and carbon fibers) improve mechanical properties. Examples of some functional fillers are antioxidants (such as ternary or aromatic amines, Irganox^{®} (Octadecyl 3,5-Di-(tert)-butyl-4-hydroxyhydrocinnamate) supplied by Ciba Specialty Chemicals Corp., and sodium hypophosphites, flame retardants (such as halogenated hydrocarbons, mineral carbonates, hydrated minerals, and antimony oxide), UV stabilizers (such as Tinuvin^{®} supplied by Ciba Geigy), stain-resistant agents such as Teflon^{®}, stearic acid, and zinc stearate, or combinations thereof.

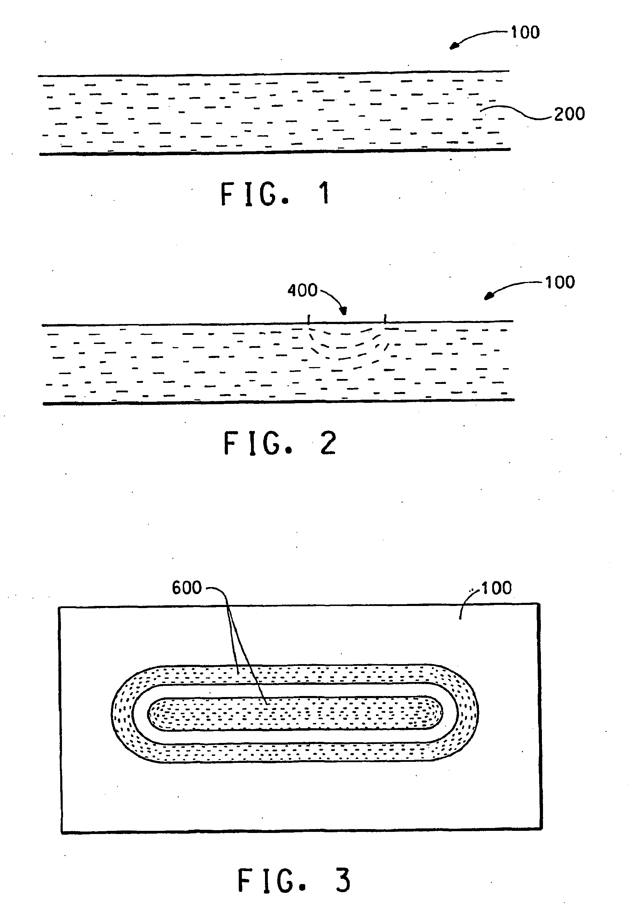

In carrying out the process of this invention, the orientation of the anisotropic particulate fillers may be done by taking advantage of the tendency of the particles to align themselves during laminar flow of the polymerizable matrix, as shown schematically in FIG 1 wherein the oriented anisotropic particles (200) are shown generally parallel to the surface of a sheet (100). The laminar flow may be created by a number of process methods, depending on the rheological nature of the polymerizable composition. Flowable compositions may have the anisotropic particulate fillers oriented by casting on a moving belt, with optional employment of a doctor blade. Extrudable uncured solid surface molding compositions may employ extrusion through a die plate, with no limitations on the die geometry. Calender rolls are used as the primary means of anisotropic particulate filler orientation, or added as an additional. The additional calendering step has the purpose of orienting the anisotropic particulate filler or may additionally be for any other purpose, such as gauging the thickness of the material or adding a texture to the surface. In general at least 70% of the anisotropic particles, and more generally, at least 90% have the same orientation.

An aesthetic is created in the uncured solid surface composition by selective reorientation of the anisotropic particles. The reoriented particles do not have the same orientation as the bulk of the material after selective reorientation, which results in the region of the reorientation (400) appearing visually different as shown in FIG 2. The actual method of selected reorientation can vary depending on the nature of the uncured solid surface composition and the desired aesthetic. The magnetic anisotropic particles have magnetic properties and are reoriented by traversing the uncured solid surface composition with magnetic fields.

The strength of the magnetic field is not critical provided the strength is sufficient to disrupt or change filler orientation in a localized volume of the surface. For purposes of illustration, a magnetic field of 35 gauss or less is suitable when applied over an extended time during the casting cure. A magnetic field of 250 gauss or more is typically used for short exposure times, including exposures of less than one second. Pattern orientation through the full thickness of a 12.7mm (½-inch) thick casting using approximate one-second exposure is produced with larger magnetic fields with mid thickness field strengths of approximately 250 gauss.

The uncured solid surface composition may optionally be textured after the reorientation of the anisotropic particles. The uncured solid surface composition may be flattened to give a smooth texture, or have an aesthetic pr functional texture added. A preferred means of texturing is by calender roll.

After any surface flattening or texturing, the uncured composition is solidified. Solidifying of the polymerizable composition after the reorientation of the anisotropic particles is done according to what polymer system is used. Most solid surface materials manufactured by thermoset processes, such as sheet casting, cell casting, injection molding, or bulk molding will use cure agents that when thermally activated will generate free radicals which then initiate the desired polymerization reactions. Either a chemically-activated thermal initiation or a purely temperature-driven thermal initiation to cure the acrylic polymerizable fraction may be employed herein. Both cure systems are well known in the art. Solidifying of thermoplastic embodiments of the invention, such as extruded thermoplastics, is accomplished by allowing the composition to cool below the glass transition temperature.

The following examples are included as representative of the principle of orientation of the anisotropic particles by a magnetic field . The percentages are by weight, and the temperatures are in centigrade, unless otherwise noted.

### EXAMPLES

### Example 1

The following ingredients were weighed out and mixed:

| | |
|---|---|
| 620 gm | Alumina Trihydrate (ATH) |
| 318.13gm | Sirup (24% PMMA in MMA) |
| 39.58 gm | MMA Monomer |
| 3.03 gm | Trimethylol propane trimethacrylate (TRIM) |
| 8.49 gm | PMA 25 paste (t-butylperoxy maleic acid) |
| 1.56 gm | Dioctyl sodium sulfosuccinate |
| 0.68 gm | 85% phosphated hydroxyethylmethacrylate in butyl methacrylate |
| 9.96 gm | stainless steel flake with magnetic characteristics |

at a temperature of 28 degrees C. After mixing for 1 minute, 0.91 grams of distilled water was added to the mixture. The mixture was then evacuated under vacuum 0,81-0,85 Bar (24-25in Hg) using a pump and a suitable condensing vapor trap. After mixing and evacuating for approximately 3 minutes, 2.58 grams of calcium hydroxide slurry (34% in sirup) and 1.33 grams of ethylene glycol dimercaptoacetate were added using syringes. After 45 seconds of additional mixing and evacuation, the mixture was poured into a container of square design to form a layer of approximately 12,7mm (0.5-inch) thickness. The container had a 1mm (0.040-inch) thick metal bottom made of AISI 301 stainless steel that had been demagnetized prior to the pour. It took approximately 20 seconds to transfer the mixed material from the mixer and pour it into the container.

The casting was then traversed with a magnetic field, creating a linear pattern. The magnetic field was created with two electromagnets with 12,7mm (0.5-inch)diameter by 32mm (1.27-inch) length inner cores made of 1215 steel. The electromagnet coils consisted of 4,000 turns, a coil winding density of approximately 126 turns/mm (3200 turns/inch), and a coil resistance of 150 ohms. The coil outer diameter was approximately 33mm (1 and 5/16-inches). The centerlines of the cylindrical electromagnets were aligned and the ends of the cores were spaced 1,5mm (0.060-inches) from the bottom of the casting container and from the top of the poured casting. The electromagnet coils were wired with opposite polarity and powered with 0.5 amperes of direct current. The electromagnets were positioned around the casting, the power was turned on, and the electromagnets were traversed across the casting at a speed of approximately 117mm (4.6 inches) per second. The power was turned on approximately 120 seconds after the calcium hydroxide slurry and ethylene glycol dimercaptoacetate were injected. The electromagnet motion was stopped and the current was turned off at the end of the linear traverse. The electromagnets were then moved away from the container, insulation was placed on top of the casting and underneath the casting container, and the casting was allowed to cure.

The electromagnet traverse created a linear pattern of darkened bands relative to the lighter background of the casting. The pattern consists of an approximate 10mm (0.4-inch) wide darkened line aligned with the centerline of the electromagnet traverse. Two background colored lines approximately 3,8mm (0.15-inches) wide parallel the 10mm (0.4-inch) darkened centerline. Two more darkened colored lines approximately 5mm (0.2-inches) wide parallel the 3,8mm (0.15-inches) lines. The patterns around both end points of the electromagnet traverse are semicircular. The semicircular patterns have darkened centers with perimeter semicircular rings around the end centers; background colored inner rings of 3,8mm (0.15-inch) radial width and darkened outer rings of 5mm (0.2-inch) radial width. Although the boundaries between colors are fuzzy or less distinct than shown in Figure 3, the drawing shows the general pattern created.

### Example 2

The metal-bottomed container described in Example 1 was demagnetized and subsequently magnetized by using the electromagnet system and motion-traverse sequence described in Example 1. A casting mixture was weighed out, mixed, and evacuated in the same manner and sequence as done in Example 1. The mixture was poured into this magnetized container approximately 20 seconds after mixing was stopped, analogous to Example 1. Insulation was placed on top of the casting and underneath the casting container and the casting was allowed to cure.

The magnetic field imparted to the container was sufficient to produce the same linear particle reorientation pattern in the casting as described in Example 1.

## Claims

1. A process for forming a decorative pattern in a surface of a solid surface material containing anisotropic particles having magnetic properties comprising the steps of:
(a) orienting at least a majority of the magnetic anisotropic particles in a flowable solid surface material by
(i) using calender rolls or
(ii) either casting flowable compositions on a moving belt or extruding extrudable uncured solid surface molding compositions through a die plate, followed by additionally orienting anisotropic particulate filler by calender rolls,
(b) Subsequently inducing a magnetic field in a portion of surface areas of the flowable solid surface material to change the orientation of the particles having magnetic properties in the magnetic field, and
(c) solidifying the flowable solid surface material, wherein the aspect ratio of the anisotropic particles is at least 20.

2. The process of Claim 1 wherein the solid surface material is comprised of acrylic resin or polyester resin.

3. The process of Claim 1 wherein the anisotropic particles having magnetic properties are selected from steel, stainless steel, nickel, and combinations thereof.

4. The process of claim 1
further comprising the following step after step (b) and prior to step (c):
texturing the surface of the solid surface material
wherein the solid surface is said extrudable uncured solid surface molding material.

5. The process of claim 4, wherein the texturing is carried out using a calender roll.

## Patentansprüche

1. Verfahren zur Bildung eines dekorativen Musters in einer Oberfläche eines Feststoffoberflächenmaterials, enthaltend anisotrope Partikel mit magnetischen Eigenschaften, umfassend die folgenden Schritte:
(a) Orientierung von mindestens einer Vielzahl der magnetischen anisotropen Partikel in einem fließfähigen Feststoffoberflächenmaterial mittels
(i) Verwendung von Kalanderwalzen oder
(ii) entweder Gießen fließfähiger Zusammensetzungen auf ein Fließband oder Extrusion extrudierbarer ungehärteter Feststoffoberflächenformzusammensetzungen durch eine Düsenplatte, gefolgt von zusätzlichem Orientieren eines anisotropen partikulären Füllstoffs mittels Kalanderwalzen,
(b) anschließende Induktion eines Magnetfelds in einem Teil der Oberflächenbereiche des fließfähigen Feststoffoberflächenmaterials zum Ändern der Orientierung der Partikel mit magnetischen Eigenschaften im Magnetfeld, and
(c) Verfestigung des fließbaren Feststoffoberflächenmaterials, wobei das Aspektverhältnis der anisotropen Partikel mindestens 20 beträgt.

2. Verfahren nach Anspruch 1, wobei das Feststoffoberflächenmaterial aus Akrylharz oder Polyesterharz besteht.

3. Verfahren nach Anspruch 1, wobei die anisotropen Partikel mit magnetischen Eigenschaften aus Stahl, Edelstahl, Nickel und Kombinationen derselben ausgewählt sind.

4. Verfahren nach Anspruch 1, ferner umfassend den folgenden Schritt nach Schritt (b) und vor Schritt (c):
Texturieren der Oberfläche des Feststoffoberflächenmaterials, wobei das Feststoffoberflächenmateri al die extrudierbare ungehärtete Feststoffoberflächenformmasse ist.

5. Verfahren nach Anspruch 4, wobei das Texturieren mittels einer Kalanderwalze durchgeführt wird.

## Revendications

1. Procédé pour la formation d'un motif décoratif dans une surface d'un matériau de surface solide contenant des particules anisotropes possédant des propriétés magnétiques comprenant les étapes:
(a) d'orientation d'au moins une majorité des particules anisotropes magnétiques dans un matériau de surface solide fluidifiable par:
(i) l'utilisation de rouleaux de calandre, ou
(ii) soit la coulée de compositions fluidifiables sur une courroie mobile, soit l'extrusion de compositions de moulage de surface solide non durcies extrudables à travers une plaque matrice, suivie par l'orientation supplémentaire d'une charge particulaire anisotrope par des rouleaux de calandre,
(b) d'induction par la suite d'un champ magnétique dans une portion de zones de surface du matériau de surface solide fluidifiable pour changer l'orientation des particules possédant des propriétés magnétiques dans le champ magnétique, et
(c) de solidification du matériau de surface solide fluidifiable,
dans lequel le rapport de forme des particules anisotropes est d'au moins 20.

2. Procédé selon la revendication 1, dans lequel le matériau de surface solide est composé d'une résine acrylique ou d'une résine polyester.

3. Procédé selon la revendication 1, dans lequel les particules anisotropes possédant des propriétés magnétiques sont choisies parmi l'acier, un acier inoxydable, le nickel et des combinaisons de ceux-ci.

4. Procédé selon la revendication 1, comprenant en outre l'étape suivante après l'étape (b) et avant l'étape (c):
de texturation de la surface de la surface solide, dans lequel le matériau de surface solide est ledit matériau de moulage de surface solide non durci extrudable.

5. Procédé selon la revendication 4, dans lequel la texturation est réalisée en utilisant un rouleau de calandre.
